# EUROPEAN PATENT APPLICATION

(11) **EP 1 916 074 A1**
(43) Date of publication of application: **30.04.2008**
(21) Application number: 06123079.3
(22) Date of filing: 27.10.2006
(51) Int. Cl.: B26B 13/28, A01G 3/02

(54) **Gardening shears**

(71) Applicant: Natura Innovation Ltd., Port Louis (MU)
(72) Inventor: Shan, Su-Hua, 104 Taipei (TW)
(74) Representative: Viering, Jentschura & Partner

(57) **Abstract**

A pair of gardening shears comprises: a first shear element (10) having a cutting blade portion at one end, a combining portion at the opposite end comprising a pivot hole (13) and a shear element combining hole (14), and a first handle further attached to the first shear element; a second shear element (20) having an anvil blade portion at one end, and a combining portion at the opposite end comprising a pivot hole (23) and a shear element combining hole (24) as well as a handle shaft combining hole (25) positioned respectively at the two sides of the pivot hole; a handle shaft (30) axially positioned within a second handle and having a combining portion at one end which comprises a pivot hole (33) and a shear element combining hole (34) wherein the combining portion of the second shear element overlaps the combining portion of the handle shaft and the combining portion of the first shear element overlaps the combining portion of the second shear element; a pivot member (40), piercing through the shell of the second handle and the pivot holes of the first shear element, second shear element and the handle shaft; a shear element combining pin (41), piercing through the shear element combining holes of said first and second shear elements; and a shear element pivot shaft (42) piercing through the handle shaft combining hole of the second shear member and the shear element combining hole of the handle shaft.

## Description

### BACKGROUND OF THE INVENTION

### 1. Technical Field

The present invention relates to gardening shears and, more particularly, to a pair of gardening shears for single hand holding and operating.

### 2. Description of Related Art

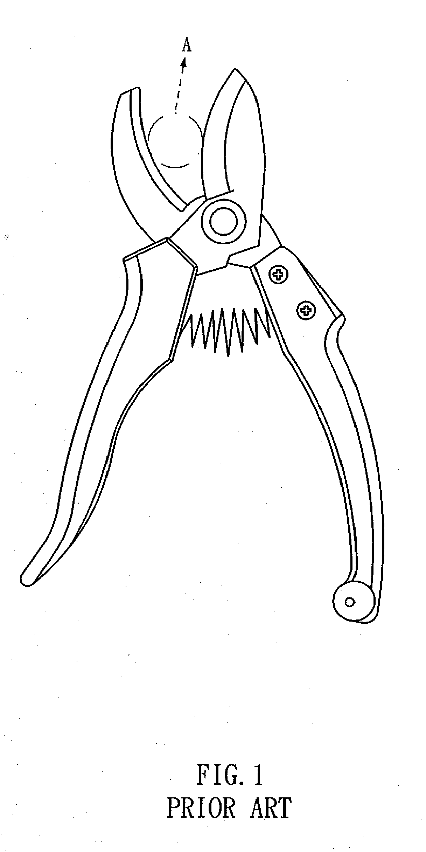

A pair of conventional gardening shears for single hand operating, as shown in **FIG. 1**, typically comprises two shear elements that are crosswise combined by a pivot member. Further, one handle may be attached to each shear element at the end beyond said pivot member. When operating such conventional gardening shears, a user squeezes both handles with single hand to drive the shear elements to approach each other and a shearing force can therefore be generated for pruning or cutting branches or stems of plants.

However, foresaid conventional gardening shears may have defects as described below.

Since such a pair of conventional shears has only one pivot member to function as a fulcrum, the shearing force of the shears is utterly derived from the user's squeezing force exerted on the handles. Thus, when the shears encounter thick or tough branches or stems of plants, the user may have to implement his extreme strength to operate the shears, and it can be difficult for the user to hole the handles stably while exerting such excessive squeezing force. Thus, such difficult operation may in turn render undesirable sway, shakiness or deviation of the shears during shearing and as a result, roughness or even tears may occur at the cut of the objective branch.

Further, when the excessive shearing force is imposed on the branches or stems under said excessive squeezing force, an excessive counterforce may be correspondingly incurred from the sheared branch to damage the single pivot member and detrimental clearance between the shear elements may successively arise to weaken the shearing force of the shears. Eventually, the shears can undesirably become unusable soon.

Since there is not a design for a pair of conventional gardening shears to restrict the opening angle thereof, when the two handles are dispersed outwardly by a spring provided therebetween, the two shear elements may by opened at an angle greater than 90 degrees. At this time, the distance of the two dispersed handles may be too large for an adult user to hold with his single hand. Thus, the user may have to always impose a squeezing force on the handles through his operating the shears to avoid foresaid excessive opening of the shears and this consequently renders effort wasting.

Besides, when a pair of conventional gardening shears is implemented to cut a stem, the two handles thereof move oppositely to cause the two shear elements swing oppositely in a curve route to squeeze an objective stem. At this time, the stem may slip in a direction opposite to the pivot member to escape from holding the shears (as depicted by **Arrow A** in **FIG. 1**). To overcome the slip, the user may have to impose an even larger squeezing force onto the handles to make the two shear members snap at the stem securely so that the shearing force can be exactly act onto the stem and cut off the stem. This is also a problem about effort wasting.

### SUMMARY OF THE INVENTION

The present invention has been accomplished under the circumstances in view to provide a pair of gardening shears which facilitates overcoming foresaid problems of a pair of conventional gardening shears, such as strenuous holding, strenuous operating and the single pivot member which is easy to get damaged.

A pair of gardening shears according to the present invention comprises:
a first shear element having a cutting blade portion at one end, a combining portion at the opposite end comprising a pivot hole and a shear element combining hole, and a first handle further attached to the first shear element;
a second shear element having an anvil blade portion at one end, and a combining portion at the opposite end comprising a pivot hole and a shear element combining hole as well as a handle shaft combining hole positioned respectively at the two sides of the pivot hole;
a handle shaft axially positioned within a second handle and having a combining portion at one end which comprises a pivot hole and a shear element combining hole wherein the combining portion of the second shear element overlaps the combining portion of the handle shaft and the combining portion of the first shear element overlaps the combining portion of the second shear element;
a pivot member, piercing through the shell of the second handle and the pivot holes of the first shear element, second shear element and the handle shaft;
a shear element combining pin, piercing through the shear element combining holes of said first and second shear elements; and
a shear element pivot shaft piercing through the handle shaft combining hole of the second shear member and the shear element combining hole of the handle shaft.

Comparing with a pair prior art gardening shears, the present invention possesses following features:
First, the disclosed gardening shears have three fulcrums wherein the first one is composed of the non-circular pivot hole of the first shear element and a combining portion of the pivot member that are mated mutually; the second one is the shear element pivot shaft connecting the second shear element and the handle shaft; and the third one is the shear element combining pin connecting the first shear element and second shear element. The present invention implements three fulcrums that share the force and counterforce generated during cutting a stem to protect the fulcrums from being damaged by undergoing excessive force. Thereby, the disclosed shears can keep proper shearing efficiency.
Second, according to the present invention, the opening angle of the shear elements is restricted by means of the combination of the pivot hole of the second shear element as well as the pivot member and the handles opened at the largest angle can still be easily held by a normal adult hand so that the squeezing force to avoid foresaid excessive opening of the shears can be saved. Also, as the opening angle of the shear elements is restricted, the unfavorable influence on the pivot member, shear element combining pin, and shear element pivot shaft caused by immoderate opening of the shear elements can be eliminated.
Third, when the disclosed gardening shears are implemented to cut a stem, the first handle is pulled toward the second handle to make the first shear element cut into the stem of the plant by a clockwise revolving movement that in turn affects the second shear element to swing with a predetermined angle around the stem to be cut. Thus, no squeezing force generated between the cutting blade portion of the first shear element and the anvil blade portion of the second shear element, so that a slip of the stem during cutting can be avoided. Consequently, the user doesn't have to expend a large squeezing force to make the two shear members snap at the stem securely so that the disclosed gardening shears facilitate saving operational effort.

Besides, by the swinging movement of the second shear member, the cutting blade portion of the first shear can keep cutting in a swinging way along a curve route through entire cutting operation so that the shearing resistance can be reduced and the user is permitted to cut off a stem or branch of a plant easily with economized effort.

At last, the disclosed gardening shears allow a user to cut off a stem or branch of a plant with proper strength so that the cutting operation can remain steady. As the shearing force keeps perpendicular to the stem to be cut, smooth cutting operation and neat cuts can be therefore ensured.

### BRIEF DESCRIPTION OF THE DRAWINGS

**Figure 1** is a plan view of a pair of conventional gardening shears;
**Figure 2** is a first exploded view of the shears according to the present invention;
**Figure 3** is a second exploded view of the shears according to the present invention;
**Figure 4** is a plan view of the shears according to the present invention showing the shears opened;
**Figure 5** is a plan view of the shears according to the present invention showing the shears closed;
**Figure 6** is a first applied view of the effort-saving shears according to the present invention;
**Figure 7** is a second applied view of the shears according to the present invention; and
**Figure 8** is a third applied view of the shears according to the present invention; and

### DETAILED DESCRIPTION OF THE PREFERRED EMBODIMENT

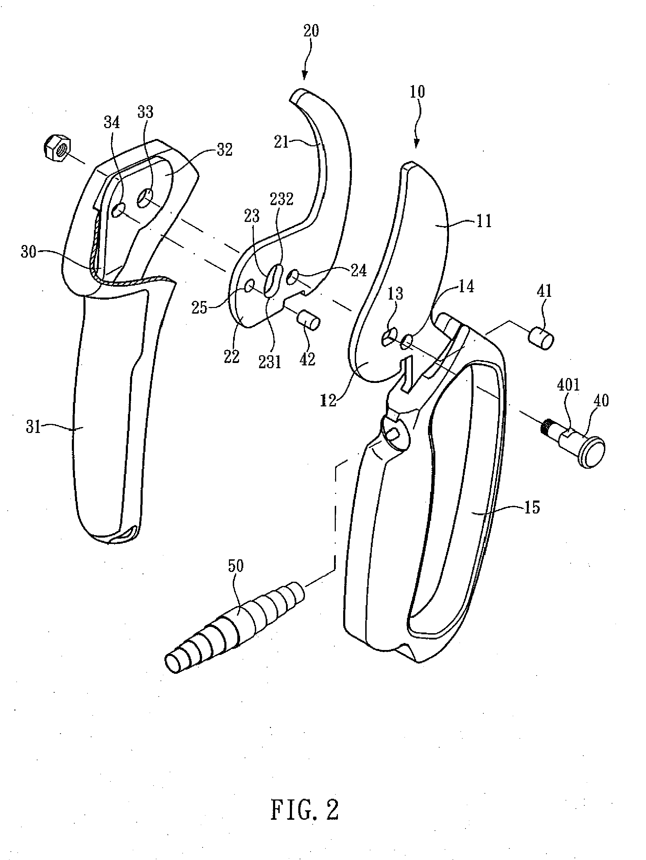

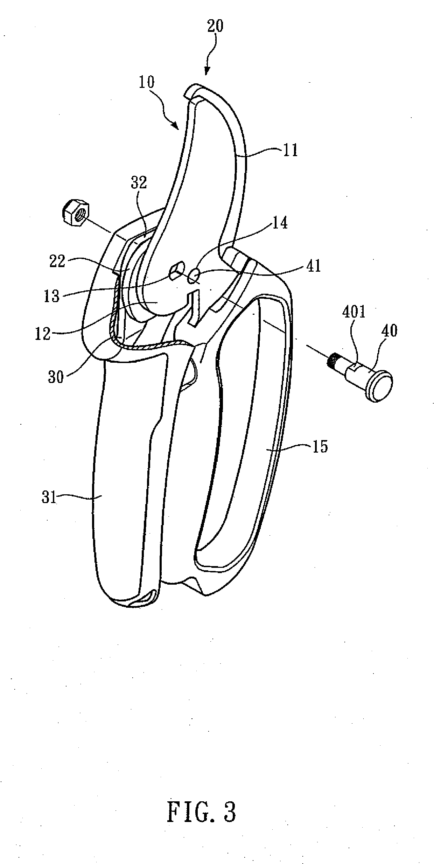

As shown in **Figures 2** and **3,** an embodiment of the disclosed effort-saving shears primarily comprises:
a first shear element **10** having a cutting blade portion **11** at one end, a combining portion **12** at the opposite end comprising a pivot hole **13** and a shear element combining hole **14,** and a first handle **15** further attached to the first shear element **10;**
a second shear element **20** having an anvil blade portion **21** at one end, and a combining portion **22** at the opposite end comprising a pivot hole **23** and a shear element combining hole **24** as well as a handle shaft combining hole **25** positioned respectively at the two sides of the pivot hole; wherein the pivot hole **23** is in an elliptic shape and has a first end **231** and a second end **232** at the two curve edges respectively;
a handle shaft **30** axially positioned within a second handle **31** and having a combining portion **32** at one end which comprises a pivot hole **33** and a shear element combining hole **34** wherein the combining portion **22** of the second shear element **20** is superimposed the combining portion **32** of the handle shaft **30** and the combining portion **12** of the first shear element **10** is superimposed the combining portion **22** of the second shear element **20;** a pivot member **40,** piercing through the shell of the second handle **31** and the pivot holes **13, 23, 33** of the first shear element **10,** second shear element **20** and the handle shaft **30** wherein the pivot member **40,** especially has a non-circular combining portion **401** piercing through a pivot hole **13** which is provided on the first shear element **10** and has a shape corresponding to the combining portion **401;** a shear element combining pin **41,** piercing through the shear element combining holes **14, 24** of said first and second shear elements **10, 20;** and a shear element pivot shaft **42** piercing through the handle shaft combining hole **25** of the second shear member **20** and the shear element combining hole **34** of the handle shaft **30.**
a compression spring **50** provided between the first handle 15 and the second handle **31.**

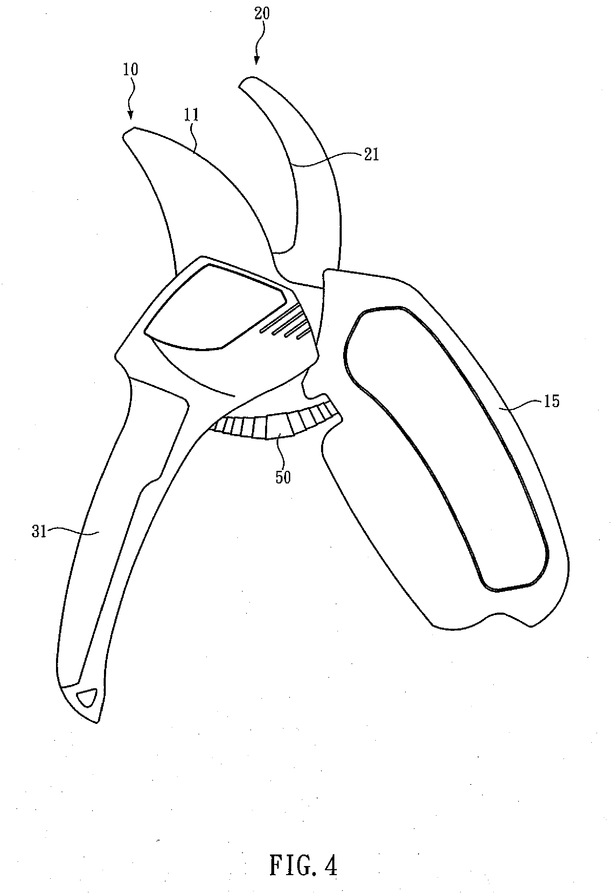

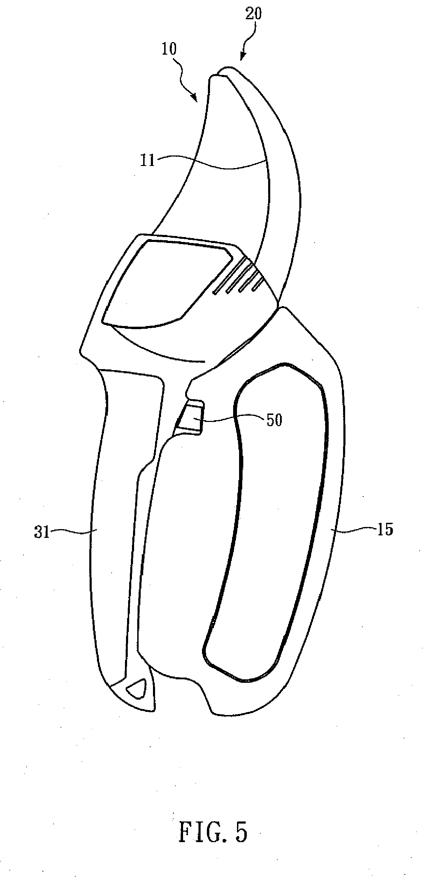

In **Figures 4 and 5,** the appearance of the exemplificative shears according to the present invention can be seen. The upper end of the second handle **31** is actually enveloping said combining portions **12, 22, 32** of the first, second shear element **10, 20** and the handle shaft **30** while it is to be clarified that the upper end of the second handle **31** is partially exploded in **Figures 2** and **3** for clearly expressing the relationship among said components.

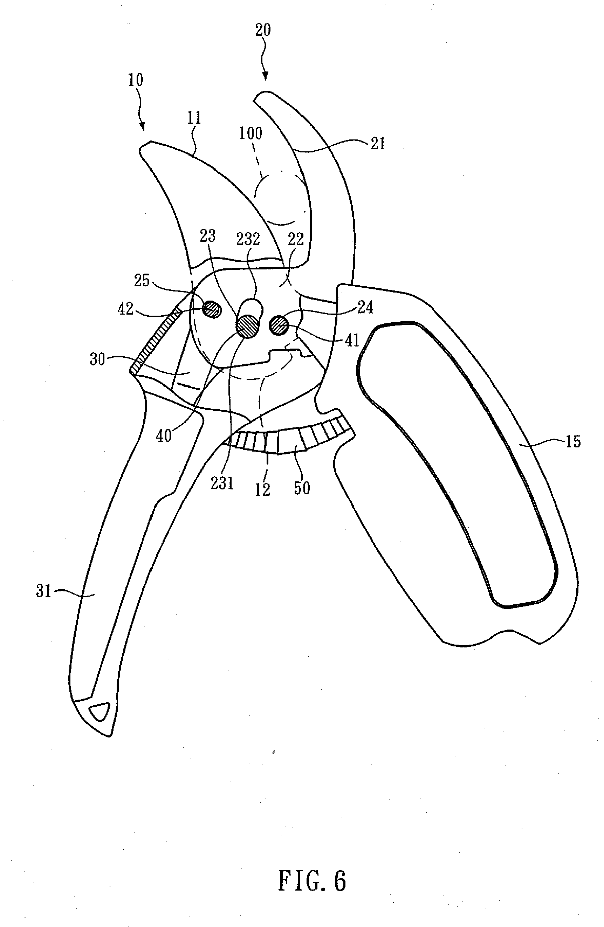

**Figures 6, 7** and **8** are provided for illustrating the operation of the disclosed subject matter.

In **FIG. 6**, the disclosed shears are opened and the cutting blade potion **11** and anvil blade potion **21** are holding a stem **100** of a plant therebetween. At this time, the first and second handles **15, 31** appear apart; the pivot member **40** is positioned against the first end **231** of the pivot hole **23** of the second shear member **20;** and under this status, the shear elements are now farthest extended.

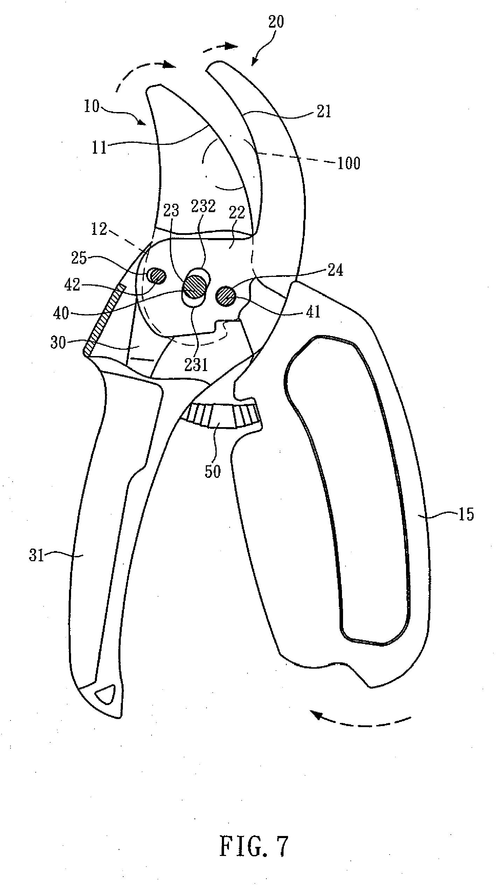

In **FIG. 7,** when the first handle **15** is pulled toward the second handle **31,** the first shear element **10** is pivoting on the pivot member **35** and the shear element combining pin **41** affects the second shear element **20** taking the shear element pivot shaft **42** as a fulcrum to slightly swing in a clockwise direction to the accompaniment of displacement of the pivot hole **23.** Then the cutting blade portion **11** of the first shear element **10** can cut into the stem **100** of the plant by a clockwise revolving movement.

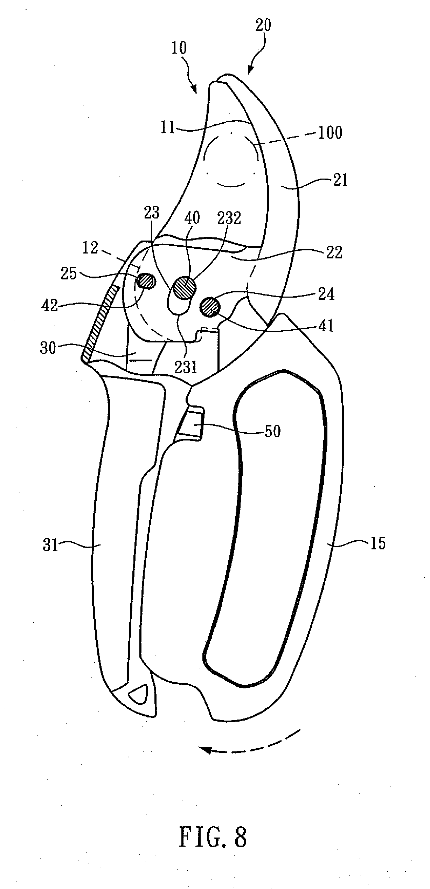

In **FIG. 8,** the first handle **15** is further pulled toward the second handle **31** and foresaid components are keeping moving until the stem **100** is completely cut off. At this time, the pivot member **40** is pressing against a second end **232** of the pivot hole **23** of the second shear member **20** and the cutting blade portion **11** and anvil blade portion **21** of the first and second shear elements **10, 20** are at an extremely close position.

Comparing with a pair prior art gardening shears, the present invention possesses following features:
First, the disclosed gardening shears have three fulcrums wherein the first one is composed of the non-circular pivot hole **13** of the first shear element **10** and a combining portion **401** of the pivot member **40** that are mated mutually; the second one is the shear element pivot shaft **42** connecting the second shear element **20** and the handle shaft **30;** and the third one is the shear element combining pin **41** connecting the first shear element **10** and second shear element **20.** Using the disclosed gardening shears to cut a stem **100,** the counterforce which acts to the first shear element **10** and second shear element **20** can be shared by the shear element combining pin **41,** the pivot member **40,** and the shear element pivot shaft **42.** Since the present invention implements three fulcrums to bear the force and counterforce generated during cutting a stem **100** collectively, the fulcrums can be protected form being damaged by undergoing excessive force. Thereby, the disclosed shears can keep proper shearing efficiency.
Second, according to the present invention, the opening angle of the shear elements is restricted by means of the combination of the pivot hole **23** of the second shear element **20** as well as the pivot member **40.** When the shears are opened at the largest angle, the pivot member **40** is pressing against the first end **231** of the pivot hole **23** of the second shear member **20;** when the shears are at an extremely close position, the pivot member **40** is pressing against the second end **232** of the pivot hole **23** of the second shear member **20.** Through foregoing structure, the disclosed shears can still be easily held by a normal adult hand even opened at the largest angle so that the squeezing force to avoid foresaid excessive opening of the shears can be saved. At meantime, such an operational range facilitates a user to exert strength on the first handle **15** and has the advantage of effort-saving operation. Also, as the opening angle of the shear elements is restricted, the unfavorable influence on the pivot member **40,** shear element combining pin **41,** and shear element pivot shaft **42** caused by immoderate opening of the shear elements can be eliminated.
Third, when the disclosed gardening shears are implemented to cut a stem **100,** the first handle **15** is pulled toward the second handle **31** to make the first shear element **10** pivot on the pivot member **40** and the shear element combining pin **41** in turn affects the second shear element **20** taking the shear element pivot shaft **42** as a fulcrum, to the accompaniment of displacement of the pivot hole **23,** to slightly swing for a predetermined angle around the stem **100** to be cut along the revolving movement of the first shear element **10.** Thus, no squeezing force generated between the cutting blade portion **11** of the first shear element **10** and the anvil blade portion **21** of the second shear element **20,** so that a slip of the stem **100** during cutting can be avoided. Consequently, the user doesn't have to expend a large squeezing force to make the two shear members snap at the stem securely. That is to say, merely the strength the user imposed on the first handle **15** is sufficient to make the cutting blade portion **11** cut into the stem **100** so that the disclosed gardening shears facilitate saving operational effort.

Beside, the disclosed gardening shears allow a user to cut off a stem or branch of a plant with proper strength so that problems such as improper shaking and sway coming along with excessive operational strength can be avoided and the cutting operation can therefore remain steady. As the shearing force keeps perpendicular to the stem **100** to be cut, smooth cutting operation and neat cuts can be therefore ensured.

It is the lever principle utilized in the present invention to transfer the force imposed on the first shear element **10** to the second shear element **20.** Through the shear element combining pin **41,** the second shear element **20** can be propelled to swing by the first shear element **10** while taking the shear element pivot shaft **42** as a fulcrum. That is to say, the second shear element **20** can be driven fully by the movement of the first shear element **10** and requires no additional operational strength whereby a pair of effort-saving shears is accomplished.

Although a particular embodiment of the invention has been described in detail for purposes of illustration, it will be understood by one of ordinary skill in the art that numerous variations will be possible to the disclosed embodiments without going outside the scope of the invention as disclosed in the claims.

## Claims

1. A pair of gardening shears primarily comprising:
a first shear element having a cutting blade portion at one end, a combining portion at the opposite end comprising a pivot hole and a shear element combining hole, and a first handle further attached to the first shear element;
a second shear element having an anvil blade portion at one end, and a combining portion at the opposite end comprising a pivot hole and a shear element combining hole as well as a handle shaft combining hole positioned respectively at the two sides of the pivot hole;
a handle shaft axially positioned within a second handle and having a combining portion at one end which comprises a pivot hole and a shear element combining hole wherein the combining portion of the second shear element overlaps the combining portion of the handle shaft and the combining portion of the first shear element overlaps the combining portion of the second shear element;
a pivot member, piercing through the shell of the second handle and the pivot holes of the first shear element, second shear element and the handle shaft;
a shear element combining pin, piercing through the shear element combining holes of said first and second shear elements; and
a shear element pivot shaft piercing through the handle shaft combining hole of the second shear member and the shear element combining hole of the handle shaft.

2. The gardening shears as claimed in Claim I, wherein the pivot hole of the second shear element is in an elliptic shape and has a first end and a second end at the two curve edges respectively.

3. The gardening shears as claimed in Claim 2, wherein when the first shear element and second shear element are opened at a predetermined angle, the pivot member is pressing against the first end of the pivot hole.

4. The gardening shears as claimed in Claim 2, wherein when the first shear element and second shear element are closed at a predetermined angle, the pivot member is pressing against the second end of the pivot hole

5. The gardening shears as claimed in Claim 1, wherein a compression spring is provided between the first handle and the second handle.
